# EUROPEAN PATENT APPLICATION

(11) **EP 2 626 547 A1**
(43) Date of publication of application: **14.08.2013**
(21) Application number: 12154729.3
(22) Date of filing: 09.02.2012
(51) Int. Cl.: F03D 1/00, F03D 11/04

(54) **V-support with supporting legs for fitting wind turbine towers**

(71) Applicant: Siemens Aktiengesellschaft, 80333 München (DE)
(72) Inventor: Grumsen, Casper Emil, 8270 Højbjerg (DK)

(57) **Abstract**

The present invention relates to a device (100) for supporting a wind turbine element (200). A first supporting leg (110) comprises a first coupling section (111) and a first fixing section (112) and a second supporting leg (120) comprises a second coupling section (121) and a second fixing section (122). A base element (101) is mountable to a supporting base (203) and a supporting joint (102) is fixed to the base element (101). The first coupling section (111) of the first supporting leg (110) and the second coupling section (121) of the second supporting leg (120) are both pivotably coupled to the supporting joint (102) such that the first supporting leg (110) and the second supporting leg (120) are pivotable with respect to each other, so that a predefined distance (d) between the first fixing section (112) and the second fixing section (122) is adjustable. The first fixing section (112) and the second fixing section (122) are fixable to the wind turbine element (200) for supporting the wind turbine element (200) to the base element (101) .

## Description

### Field of invention

The present invention relates to a device for supporting a wind turbine element, in particular a wind turbine tower section, and to a system for supporting a wind turbine element, in particular a wind turbine tower section. Furthermore, the invention relates to a method for supporting a wind turbine element, in particular a wind turbine tower section.

### Art Background

Modern wind turbines become larger and larger. Hence, also respective wind turbine elements, such as wind turbine tower sections, blade sections or cell sections, increase its sizes. Due to the large sizes of the wind turbine elements, the transportation between the manufacturing location and the place of operation of the wind turbine is difficult. Moreover, the large wind turbine elements have to be stored in a safe manner before being assembled.

Hence, the wind turbine elements are fixed to a supporting base, such as a supporting base of a transportation vehicle or to a supporting base of a storage assembly. Because the wind turbine elements, such as the wind tower section, comprise different sizes and diameters, the fixation elements are customized to the sizes of the specific wind turbine element to be fixed.

For example, different wind tower sections comprise different tower diameters. At each end of a wind tower section, a bolt cycle is formed to a flange, wherein the flanges are adapted for being fixed to an adjacent wind turbine section at the place of operation of the wind turbine. These bolt cycles are also used for fixing the wind tower section during operation or during storage. Because the sizes of the wind tower sections vary, also the bolt cycle diameters vary. Hence, for each wind tower turbine, a customized fixing means has to be produced in order to comply with the different sizes of the wind tower diameters.

The customized fixation means are designed and tested in a three-dimensional CAD program, until the suitable fitting is found. In particular, the size of the fixation means is compared to the size of the bolt cycle and with the size and design of the support base, to which the wind tower element is supposed to be fixed.

Because the customized fixation means are inflexible, an adaption of the fixing means is not possible. Due to manufacturing tolerances, e.g. due to different sizes of the holes of the bolt cycle, and because the therefore not exactly matching fixation means, there is a high risk of damage to the wind turbine element.

### Summary of the Invention

It may be an object of the present invention to provide an adjustable coupling for fixing a wind turbine element to a supporting base.

This objective may be solved by a device for supporting a wind turbine element, by a system for supporting a wind turbine element and by a method for supporting a wind turbine element according to the independent claims.

According to a first aspect of the present invention a device for supporting a wind turbine element, in particular a wind turbine tower section is presented. The device comprises a first supporting leg with a first coupling section and a second fixing section and a second supporting leg with a second coupling section and a second fixing section. Furthermore, the device comprises a base element which is mountable to a supporting base and a supporting joint, which is fixed to the base element. The first coupling section of the first supporting leg and the second coupling section of the second supporting leg are both pivotably coupled to the supporting joints such that the first supporting leg and the second supporting leg are pivotable with respect to each other, so that the predefined distance between the first fixing section and the second fixing section is adjustable. The first fixing section and the second fixing section are fixable to the wind turbine element for supporting the wind turbine element to the base element.

According to a further exemplary embodiment of the present invention, a system for supporting a wind turbine element, in particular a wind turbine tower section, is presented. The system comprises a first device according to the above described device and a second device according to the above described device. The base element of the first device and the base element of the second device are mountable to a supporting base e.g. in a mutually spaced manner.

According to a further exemplary embodiment, a method for supporting a wind turbine element, in particular a wind turbine tower section is presented. According to the method, a first coupling section of a first supporting leg and a second coupling section of a second supporting leg are coupled to a supporting joint such that the first supporting leg und and the second supporting leg are pivotable with respect to each other, so that the predefined distance between the first fixing section and the second fixing section is adjustable. Furthermore, according to the method, a first fixing section of the first supporting leg and the second fixing section of the second supporting leg are fixed to the wind turbine element for supporting the wind turbine element to a base element to which the supporting joint is fixed.

By the above described device, the system and the method, a wind turbine element may be supported and mounted e.g. to a supporting base in a suitable manner. The supporting base may be a storage fixation or a section of a transportation vehicle, such as a ship, a train or a truck, for example.

The first supporting leg and the second supporting leg are adapted for transferring the weight force of the wind turbine element to the base element and further to the supporting base. The first and second supporting legs may be supporting rods or any other rigid and stiff force transmitting elements. The supporting legs may be made of steel or of composite material.

The first coupling section and the second coupling section are mounted to the base element by a supporting joint, e.g. by a common or an individual pin joint. The first and second fixing section comprise respective fixing provisions, such as through holes for inserting fixing bolts or screws, so that e.g. by a bolt connection a weight forced of the wind turbine element to be supported is transmittable to the supporting base.

The first coupling section may be formed at a first end of the first supporting leg and the first fixing section may be formed at a second end of the first supporting leg, wherein the first end is located opposed to the second end along the first supporting leg. In the same manner, the respective second coupling section and the respective second fixing section are formed at mutually opposed first and second ends of the second supporting leg.

The base element may be a carrying plate or a bracket which comprises a mounting section and/or mounting means for mounting the device to the supporting base. Furthermore, the base element comprises fixation means for fixing the supporting joints.

Hence, by coupling a first coupling section of the first supporting leg and/or the second coupling section of the second supporting leg pivotably with respect to the supporting joint, the distance between the first fixing section and the second fixing section is adjustable. Additionally, the first supporting leg and/or the second coupling section of the second supporting leg are pivotable, such that the relative alignment of the first supporting leg and/or the second supporting leg with respect to the supporting base and/or the wind turbine element is adjustable. Hence, the first fixing section and the second fixing section are adjustable to a desired fixing location with respect to the wind turbine element to be supported. Hence, even if different wind turbine elements with varying sizes have to be supported, the fixing location of the first fixing section and the second fixing section is variable and adjustable with respect to the wind turbine element. Hence, by the above described device and system for supporting the wind turbine element, a plurality of differently sized wind turbine elements is supportable.

Hence, by using the above described device and system of the present invention, a plurality of wind turbine element sizes may be covered due to the adjustable distance between the first fixing section and the second fixing section of the first supporting leg and the second supporting leg and due to the pivoting of the first and second supporting leg with respect to the base element. In particular, the first supporting leg and the second supporting leg describe an adjustable angle between each other such that the first supporting leg and the second supporting leg form e.g. a V-shape (triangular shape) which provides a stable, highly durable and adjustable supporting device and supporting system. Hence, by the adjustable and hence precise adjusting of the legs with respect to the supported wind turbine element, a proper fixing of the wind turbine element is achieved which reduces also a risk of damaging during mounting of the wind turbine element to the supporting base.

Furthermore, due to the proper aligned positions of the respective fixing sections, it may be assured that each supporting leg transmits a desired part of the weight force of the wind turbine element to be supported. Moreover, standard profiles of the supporting legs may be used. Additionally, the first and/or second supporting leg may be formed symmetrically, such that respective fixing section may act as the respective coupling section and vice versa. Hence, the first and/or second supporting leg may be switched around without losing its functionality. Hence, an easier and faster mounting of the supporting legs is achievable.

According to a further exemplary embodiment, the first length of the first supporting leg and/or a second length of the second supporting leg is/are adjustable.

The first length may describe the distance between a reference point at the first coupling section and a further reference point at the first fixing section. The second length may describe a distance between a reference point at the second coupling section and a further reference point at the second fixation section.

The first supporting leg and the second supporting leg may comprise a respective length between approximately 150 mm (millimeter) and approximately 350 mm, preferably approximately 250mm.

For example, according to an exemplary embodiment of the present invention, at least one of the first supporting leg and the second supporting leg is formed in a telescoping manner for adjusting the respective first length or the respective second length. For example, the first supporting leg and/or the second supporting leg comprise(s) two leg parts, wherein one leg part comprises a smaller diameter in comparison to the other leg part, such that the one leg part is slideable inside the other leg part. The relative position between the one leg part and the other leg part may be fixable e.g. by a respective first and second locking pin, for example.

The first length and/or the second length may be adjusted for example in a mechanical manner, e.g. by an adjustable screw/nut connection and/or by electrical, hydraulic or pneumatic actuators. Furthermore, also linear servo motors may be coupled to the first supporting leg and the second supporting leg for adjusting the respective first and/or second supporting leg.

According to a further exemplary embodiment, the base element comprises a supporting surface with a surface plane, wherein a relative position between the supporting joint and the base element along the surface plane is adjustable.

For example, to the supporting surface, a rail system or a groove may be formed or attached, wherein the supporting joint comprises for example a respective guiding pin or groove or a guiding rail, or vice versa.

According to a further exemplary embodiment, the supporting base comprises a further supporting surface with a further surface plane, wherein a relative position between the base element and the supporting base along the further surface plane is adjustable.

For example, to the supporting base, a rail system or a groove may be formed or attached, wherein the base element comprises for example a respective guiding pin or groove or a guiding rail, or vice versa.

Furthermore, according to a further exemplary embodiment, a further distance between the base element and the supporting base may be adjustable, for example.

According to a further exemplary embodiment, the supporting joint comprises a locking arrangement which is adapted
a) for locking the first supporting leg and the second supporting leg such that the pivoting of the two and/or a pivoting of each leg is disabled, and
b) for releasing the first supporting leg and the second supporting leg such that a relative pivoting between the two legs and/or a pivoting of both legs is provided.

Hence, e.g. the distance between the first fixing section and the second fixing section and/or an angle between the first supporting leg and the second supporting leg may be predetermined and fixed before the wind turbine element is fixed to the first fixing section and the second fixing section. Moreover, an angled position between both legs and the base element is adjustable. Hence, an easier and simpler mounting of the wind turbine element to the first fixing section and the second fixing section may be achieved.

According to a further exemplary embodiment, at least one of the first supporting leg and the second supporting leg comprises a linear-shaped form, an L-shaped form or a curve-shaped form.

According to a further exemplary embodiment, the supporting leg comprises a first joint pin. The first coupling section is pivotably coupled by the first joint pin to the supporting joint.

According to a further exemplary embodiment, the second coupling section is pivotably coupled by the first joint pin to the supporting joint.

Hence, if the first coupling section and the second coupling section share one common first joint pin, the first supporting leg and the second supporting leg comprises a common pivoting axis. Hence, the first supporting leg and the second supporting leg may comprise e.g. metaphorically speaking a V-shaped design.

According to a further exemplary embodiment, the supporting joint comprises a second joint pin, wherein the second coupling section is pivotably coupled by the second joint pin to the base element. In a further exemplary embodiment, the second joint pin is spaced apart from the first joint pin, so that the first supporting leg, the second supporting leg and the supporting joint forms metaphorically speaking a U-shaped design.

According to a further exemplary embodiment, the base element comprises a protrusion or a groove to which the supporting joint is coupled.

For example, if the base element comprises a protrusion, a protrusion may form for example a first rim and a second rim between which the first joint pin and/or the second joint pin is (e.g. pivotably) attachable.

Summarizing, the first supporting leg and the second supporting leg may form a metaphorically speaking V-shaped design with which a variety of wind turbine elements, e.g. wind turbine tower sections, with different sizes may be supported by using one and the same device or system. Furthermore, also a plurality of pairs of first and second supporting legs may be attached to a common base element.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a perspective view of a device for supporting a wind turbine element according to an exemplary embodiment of the present invention; and
Fig. 2 shows a schematical view of a wind turbine element which is fixed to a system according to an exemplary embodiment of the present invention.

### Detailed Description

The illustrations in the drawings are schematical. It is noted that in different figures, similar or identical elements are provided with the same reference signs.

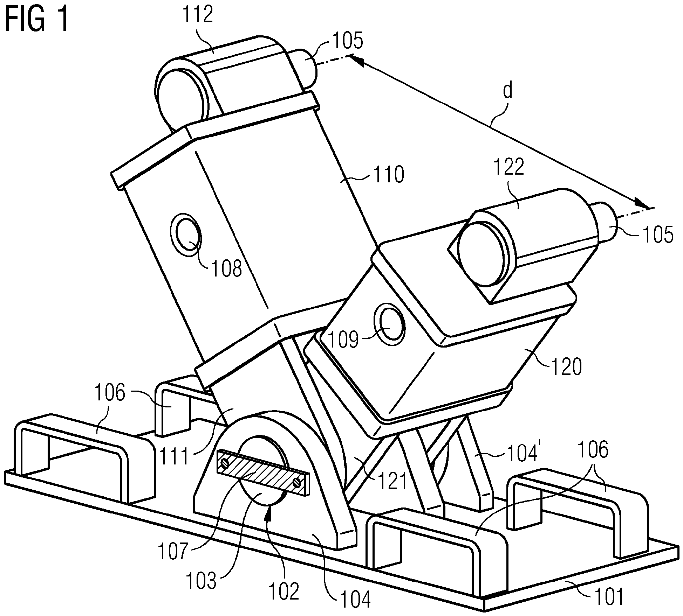

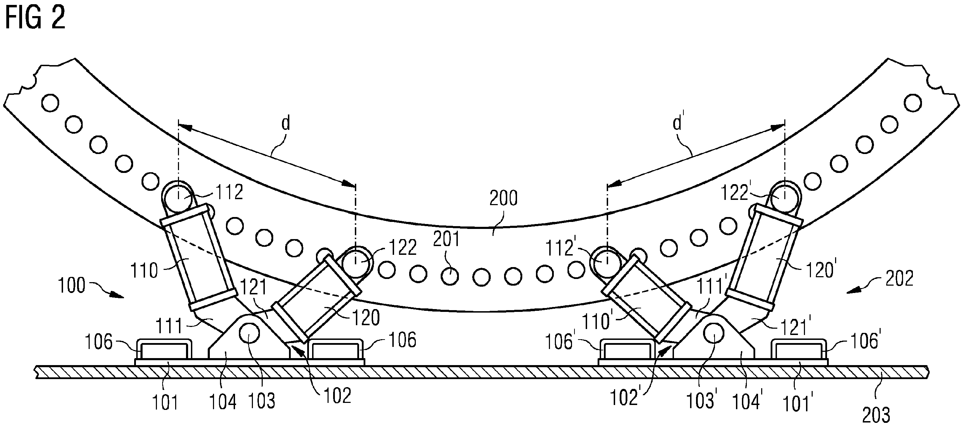

Fig. 1 shows a device 100 for supporting a wind turbine element 200 (shown in Fig. 2). The device 100 comprises a first supporting leg 110 with a first coupling section 111 and a first fixing section 112 and a second supporting leg 120 with a second coupling section 121 and a second fixing section 122. The device 100 further comprises a base element 101 which is mountable to a supporting base 203 (as shown in Fig. 2) and a supporting joint 102 which is fixed to the base element 101. To the top of the fixing sections 112, 122 respective lifting eyes may be formed, such that an improved transportation of the device 100 is achieved.

The first coupling section 111 of the first supporting leg 110 and the second coupling section 121 of the second supporting leg 120 are both pivotably coupled to the supporting joint 102 such that the first supporting leg 110 and the second supporting leg 120 are pivotable with respect to each other, so that a predefined distance d between the first fixing section 112 and the second fixing section 122 is adjustable.

The first coupling section 111 and the second coupling section 121 may both be coupled e.g. to a joint pin 103. The joint pin 103 may be inserted into a through hole of a protrusion 104 which protrudes from the base element 101. As shown in Fig. 1, two protrusions 104, 104' extend from the base element 101, wherein the joint pin 103 is inserted into both protrusions 104, 104' and runs between both protrusions 104. Between the protrusions 104, 104' the first coupling section 101 and the second coupling section 102 are inserted. Each coupling section 111, 121 comprise a respective through hole through which the joint pin 103 is guided.

As shown in Fig. 1, the first coupling section 111 and the second coupling section 112 comprise respective rims which overlap each other such that the joint pin 103 runs from one protrusion 104 through a rim of the first coupling section 111, then through a further rim of the second coupling section 121, next through a further rim of the first coupling section 111, next through a further rim of the second coupling section 121 and finally through the further protrusion 104'.

Hence, if the first coupling section 111 and the second coupling section 121 are pivotably coupled to the base element 101 by a common joint pin 103, the first supporting leg 110 and the second supporting leg 120 comprise a common rotary axis which is concentrically to the rotating axis of the joint pin 103.

Alternatively, the first coupling section 101 may be pivotably coupled to the protrusions 104, 104' by the joint pin 103 and the second coupling section 121 may be pivotably coupled to the protrusions 104, 104' by a further joint pin, wherein the joint pin 103 and the further joint pin are spaced apart from each other and which joint pins 103 run parallel with respect to each other.

In Fig. 1, the first supporting leg 110 and the second supporting leg 120 are formed with a linear extension, wherein both supporting legs 110, 120 are pivotably coupled by the common joint pin 103. The first coupling section 111 and the second coupling section 121 are formed at a respective end section of the first supporting leg 110 and the second supporting leg 120. The respective first fixing section 112 and the respective second fixing section 122 are located at respective end sections of the respective supporting legs 110, 120, wherein the end sections are located at opposite ends with respect to further end sections where the first coupling section 111 and the second coupling section 121 are formed.

The first fixing section 112 and the second fixing section 122 are spaced from each other by a predefined distance d. Due to a pivoting of the first supporting leg 110 and the second supporting leg 120 with respect to each other, the distance d is adjustable and hence the relative position of the first fixing section 112 and the second fixing section 122 with respect to the wind turbine element 200 to be supported is adjustable. For this reason, the device 100 is individually adaptable to a variety of different sized wind turbine elements 200 to be supported.

The first fixing section 112 and the second fixing section 122 may comprise a lug, through which a respective fixing pin 105 is insertable. The fixing pin 105 may be inserted in the respective lug and in a respective bore hole 201 (as shown in Fig. 2) of the wind turbine element 200 to be supported in order to couple the respective supporting leg 110, 120 to the wind turbine element 200. The respective fixing pin 105 may have a diameter of approximately 30 mm to approximately 60 mm.

Furthermore, the first supporting leg 110 comprises a first length and the second supporting leg 120 comprises a second length, wherein the first length and/or the second length is adjustable. As can be taken from Fig. 1, the first supporting leg 110 may be divided into two parts, wherein one part comprises a smaller diameter than the other part, such that the smaller part is slideable into the other larger part. In other words, the first supporting leg 110 and/or the second supporting leg 120 may be adjustable in a telescopically manner. Each part of the first supporting leg 110 may comprise a hole matrix, so that a desired first length is adjusted by inserting a first locking pin 108 into a respect hole pair of the hole matrix in order to fix the desired first length of the first supporting leg 110. The second supporting leg 120 may be designed in the same way, wherein, as can be taken in Fig. 1, the desired position may be fixed by a second locking pin 109.

If the wind turbine element 200 is fixed to the respective fixing section 112, 122, the desired distance d is thereby fixed as well. Furthermore, the desired distance d may be adjusted before the wind turbine element 200 is coupled to the respective fixing sections 111, 112. Thereby, the desired distance d and the desired relative position between the first supporting leg 110 and the second supporting leg 122 is adjusted respectively, wherein in a subsequent step, the desired position of the respective supporting legs 110, 120 is fixed by a locking arrangement 107. As can be taken from Fig. 1, the locking arrangement 107 may comprise a locking element which locks the joint pin 103 and the respective supporting leg 110, 120 from a further relative pivoting.

The adjusting of the first length and the second length of the respective supporting legs 110, 120 and/or the adjustment of the desired position of the first supporting leg 110 and the second supporting leg 120 with respect to each other may be achieved by using e.g. an adjustable screw/nut connection, whereby controlled actuators, e.g. linear servo motors, hydraulic or pneumatic actuators may be used.

Furthermore, as can be taken from Fig. 1, the base element 101 comprises fixing elements 106, wherein the base element 101 may be fixed to a supporting base 203 (as shown in Fig. 2) by the fixing elements 106. For example, the fixing elements 106 form lugs through which a bar for fixing the base element 101 is insertable.

Fig. 2 shows a system for supporting the wind turbine element 200, wherein the system comprises two devices 100, 202 as shown in Fig. 1. In Fig. 2, the wind turbine element 200 is in particular a wind turbine tower section.

In Fig. 2, the second device 202 is shown, which may comprise the same or similar features as the first device 100 as shown in Fig. 1. The second device 202 comprises a first supporting leg 110' and a second supporting leg 120'. Each supporting leg 110', 120' comprises a respective fixing section 112', 122' and a respective coupling section 111', 121'. The first supporting leg 112' and the second supporting leg 122' are pivotably coupled by a joint pin 103'. The joint pin 103' is supported by a protrusion 104 which extends from the base element 101'. The base element 101' comprises fixing elements 106' for being fixed to the supporting base 203.

The wind turbine tower section may comprise a cylindrical shape, wherein at each end a flange with a bore hole matrix comprising a plurality of bore holes 201 is formed. The bore hole matrix may run along a circumferential direction with respect to a center axis of the wind turbine tower section. The flange of the wind turbine tower section is used for fixing the wind turbine tower section to an adjacent wind turbine element 200. Additionally, the bore holes 201 are used for supporting purposes during transportation or storage of the wind turbine element 200.

As shown in Fig. 2, the fixing sections 112, 122 of the first device 100 and the fixing sections 112', 122' of the second device 202 are adjusted in such a way that the fixing sections 112, 122, 112', 122' (i.e. fixing holes of the fixing sections) are concentrically to a respective bore hole 201 of the flange of the wind turbine tower section. Hence, the fixing pins 105 may easily be inserted through the respective fixing sections 112, 122, 112', 122' and the respective bore holes 201. If another wind turbine tower section with a different size is supposed to be supported by the devices 100, 202 and if the another wind turbine tower section comprises a different diameter with a different run of the bore hole matrix, the supporting legs 110, 120 of the first device 100 and the supporting legs 110', 120' of the second device 202 may be pivoted with respect to each other such that the distances d, d' are adjustable. Hence, the fixing sections 112, 122, 112', 122' are alignable again to the differently sized and arranged bore holes 201 of the other wind turbine tower section.

The supporting legs 110, 120, 110', 120' shown in Fig. 2 comprise a single tilted run and have an L-shaped form.

The respective supporting joint 102, 102' may be fixed to a supporting surface of the base element 101, wherein a relative position between the supporting joints 102, 102' and the base element 101, 102' along the supporting surface is adjustable. Additionally or alternatively, the respective base elements 101, 101' may be fixed to a further supporting surface of the supporting base 203, wherein a relative position between the respective base elements 101, 101' along the further surface plane of the supporting base 203 is adjustable. Hence, a more flexible system for supporting a wind turbine element 200 is achieved.

As shown in Fig. 2, to each base element 101 a respective pair of supporting legs 110, 120, 110', 120' is pivotably mounted. In an alternative exemplary embodiment of the present invention, the base elements 101, 101' may be formed integrally in one piece. In other words, to the base elements 101, 101' a single further supporting leg and/or a plurality of respective pairs of supporting legs 110, 120, 110', 120' is pivotably mounted.

The base elements 101, 101' are shown in Fig. 2 in a platelike embodiment. According to further exemplary embodiment of the present invention, the base element 101, 101' may be formed in a frame-like manner which surrounds at least partially the wind turbine element 200, so that a respective pair of supporting legs 110, 120, 110', 120' must not necessarily be fixed to a base element location which supporting surface runs within a horizontal plane. The supporting surface may also run for example within a vertical plane or within a plane which normal comprises an angle to the normal of the horizontal plane.

By the system for supporting a wind turbine element 200, a simple and adjustable fixation of a wind turbine element 200 is achieved. In a first step, the wind turbine element 200 may be lowered by lifting means, e.g. by a reach stacker or a crane, until the wind turbine element 200 has a predetermined position with respect to the devices 100, 202, such that the respective supporting legs 110, 120, 110', 120' reach the bore holes 201 of wind turbine element 200 to be supported. Next, the respective supporting legs 110, 120, 110', 120' are then pivoted and thereby adjusted until each fixing section 112, 122, 112', 122' comprise i.e. a concentrically position to a respective bore hole 201 of the wind turbine element 200. Next, the fixing pins 105 are fitted into the fixing sections 112, 122, 112', 122' and the respective bore holes 201 in order to support the wind turbine element 200 to the base element 100 and the supporting base 203 respectively.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Device (100) for supporting a wind turbine element (200), in particular a wind turbine tower section, the device (100) comprising
a first supporting leg (110) with a first coupling section (111) and a first fixing section (112),
a second supporting leg (120) with a second coupling section (121) and a second fixing section (122),
a base element (101) which is mountable to a supporting base (203), and
a supporting joint (102) which is fixed to the base element (101),
wherein the first coupling section (111) of the first supporting leg (110) and the second coupling section (121) of the second supporting leg (120) are both pivotably coupled to the supporting joint (102) such that the first supporting leg (110) and the second supporting leg (120) are pivotable with respect to each other, so that a predefined distance (d) between the first fixing section (112) and the second fixing section (122) is adjustable, and
wherein the first fixing section (112) and the second fixing section (122) are fixable to the wind turbine element (200) for supporting the wind turbine element (200) to the base element (101).

2. Device (100) according to claim 1,
wherein a first length of the first supporting leg (110) and/or a second length of the second supporting leg (120) is adjustable.

3. Device (100) according to claim 2,
wherein at least one of the first supporting leg (110) and the second supporting leg (120) is formed in a telescopic manner for adjusting the respective first length or the respective second length.

4. Device (100) according to one of the claims 1 to 3,
wherein the base element (101) comprises a supporting surface with a surface plane,
wherein a relative position between the supporting joint (102) and the base element (101) within the surface plane is adjustable.

5. Device (100) according to one of the claims 1 to 4,
wherein the supporting joint (102) comprises a locking arrangement (107) which is adapted
a) for locking the first supporting leg (110) and the second supporting leg (120) such that a pivoting between the two legs (110, 120) and/or a pivoting of each leg (110, 120) is disabled, and
b) for releasing the first supporting leg (110) and the second supporting leg (120) such that a relative pivoting between the two legs (110, 120) and/or a pivoting of both legs (110, 120) is provided.

6. Device (100) according to one of the claims 1 to 5,
wherein at least one of the first supporting leg (110) and the second supporting leg (120) comprises a linear form, an L-shaped form or a curve-shaped form.

7. Device (100) according to one of the claims 1 to 6,
wherein the supporting joint (102) comprises a first joint pin (103), and
wherein the first coupling section (111) is pivotably coupled by the first joint pin (103) to the base element (101).

8. Device (100) according to claim 7,
wherein the second coupling section (121) is pivotably coupled by the first joint pin (103) to the base element (101).

9. Device (100) according to claim 7,
wherein the supporting joint (102) further comprises a second joint pin which is spaced apart from the first joint pin (103),
wherein the second coupling section (121) is pivotably coupled by the second joint pin to the base element (101).

10. Device (100) according to one of the claims 1 to 9,
wherein the base element (101) comprises a protrusion (104) to which the supporting joint (102) is coupled.

11. System for supporting a wind turbine element (200), in particular a wind turbine tower section, the system comprising
a first device (100) according to a device (100) of one of the claims 1 to 10, and
a second device (202) according to a device (100) of one of the claims 1 to 10,
wherein the base element (101) of the first device (100) and the base element (101) of the second device (202) are mountable to a supporting base (203).

12. Method for supporting a wind turbine element (200), in particular a wind turbine tower section, the method comprising
pivotably coupling a first coupling section (111) of a first supporting leg (110) and a second coupling section (121) of a second supporting leg (120) to a supporting joint (102) such that the first supporting leg (110) and the second supporting leg (120) are pivotable with respect to each other, so that a predefined distance (d) between the first fixing section (112) and the second fixing section (122) is adjustable,
fixing a first fixing section (112) of the first supporting leg (110) and a second fixing section (122) of the second supporting leg (120) to the wind turbine element (200) for supporting the wind turbine element (200) to a base element (101) to which the supporting joint (102) is fixed.
